# EUROPEAN PATENT SPECIFICATION

(11) **EP 3 680 018 B1**
(45) Date of publication and mention of the grant of the patent: **04.01.2023**
(21) Application number: 18854718.6
(22) Date of filing: 06.09.2018
(51) Int. Cl.: B02C 17/18, G01N 3/56, B02C 17/22

(54) **SYSTEM FOR IN-LINE MEASUREMENT OF MILL LINER WEAR AND MILL BOLT TENSION BY MEANS OF AN ECHOGRAPHIC SENSOR INSERTED INTO THE THREADED END OF BOLTS**
SYSTEM ZUR INLINE-MESSUNG DES AUSKLEIDUNGSVERSCHLEISSES UND DER BOLZENSPANNUNG EINER WALZWERKS MITTELS EINES IN DAS GEWINDEENDE VON BOLZEN EINGEFÜHRTEN ECHOGRAFISCHEN SENSORS
SYSTÈME DE MESURE EN LIGNE D'USURE DE REVÊTEMENTS ET TENSION DE BOULONS DE BROYEUR PAR CAPTEUR ÉCHOGRAPHIQUE INSÉRÉ À L'EXTRÉMITÉ FILETÉE DES BOULONS

(30) Priority: 07.09.2017 CL 20172260
(43) Date of publication of application: 15.07.2020
(73) Proprietor: SENSTECH SPA, Santiago (CL)
(72) Inventor: BUSTOS ROBLEDO, Juan Pablo, Santiago (CL); VILLAVICENCIO ARAYA, Cristián, Santiago (CL)
(74) Representative: Herrero & Asociados, S.L.
(86) International application number: PCT/CL2018/050083
(87) International publication number: WO 2019/046984

(56) References cited:
- WO-A1-2007/101319
- WO-A1-2013/116954
- AU-C1- 2004 200 377
- CA-A1- 2 890 971
- US-B2- 9 476 689

## Description

The mining mills are mechanical artifacts that are used in a mineral processing stage called a grinding mill and which consists of decreasing the size of the ore entering the mill which is continuously rotating to obtain dry particles or mineral pulp of size suitable for the following processes in the processing chain.

The mills are covered by an inner shell resistant to mechanical abrasion and which is comprised of smaller and manipulable replaceable elements which are normally steel and sometimes also contain rubber elements. The elements of the inner housing are secured to the outer body or shell of the mill by bolts specially designed for this purpose and which are inserted into holes in the housing elements and which thread and nut are outside the body of the mill.

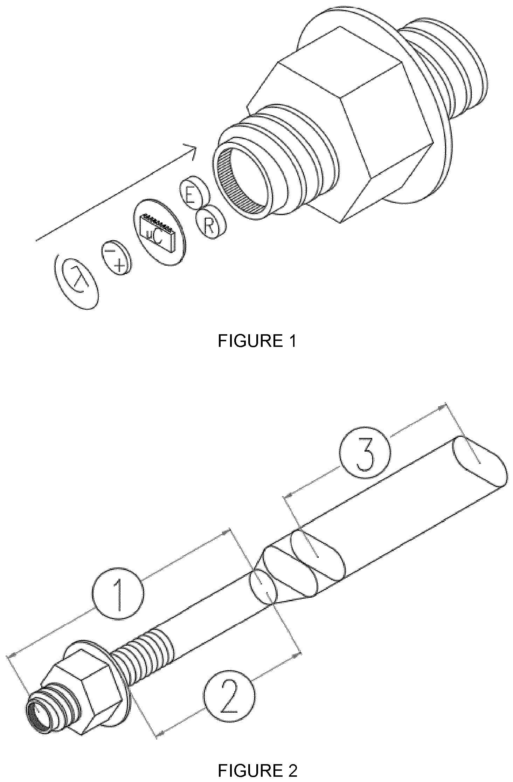

The mill bolts are fabricated from selected steels and then subjected to thermal treatments that ensure that the bolt supports the mechanical requirement to which it is subjected to the mechanical fixing element, however the end of the bolt facing the inside of the mill must support wear as well as the lining that supports so that an element is usually installed so that the pin extends the bolt and which in turn is designed to support the abrasion (see FIG. 2).

In the mining industry, ball mills are used in which a set of steel balls perform the action of grinding the ore and also in mills which in general are of greater diameter and capacity in that the milling process occurs by the action of balls per well by the action of the mineral itself so as to effect a semi autogenous grinding, so they are referred to as SAG mills.

Due to the abrasive action of the mill operation, it is necessary to periodically change the inner coating as it is worn. Taking into consideration the high benefit of the continuous operation of the mill and/or the high cost of the stops, the measurement of the wear state of the housing results in a useful data for taking the decision about the moment the mill is stopped to make the coating change. It is also interesting to have information about the tightening of the bolts since the bolt tightening state allows to diagnose the general state of the mill and predict faults. With respect to these issues, wear and stability of the mill housings, there are many operational theories and recipes, however, there is no reliable information from this while the mills are operating. In fact, only subsequent examinations information is obtained since there are no sufficiently accurate and reasonable cost sensors for implementing the operation of the mills. Documents US 9 476 689 B2 and WO 2007/101319 A1 disclose measurement techniques to detect wear in mill liners using bolts with integrated sensors.

### TECHNICAL PROBLEM

The technical problem sought to solve this invention is to provide a cheap and easy to implement system which allows direct measurement of the wear state of the inner mill coating and the tightening stress of the bolts, without the need to stop and interrupt its operation.

### STATE OF THE ART

While the technical problem is known for decades, solutions of reasonable cost have not been implemented to the technical problem posed. The invention also relates to some solution proposals:
- A possibility is to stop the mill and measure with mechanical instruments, but the high cost of the stops is a serious drawback of this alternative.
- Another more sophisticated possibility is to stop the mill and measure with optical instruments or image analyzers.
- Stopping the mill and measuring with portable echographic sensors, the length of the bolts and the thickness of the wear pieces, but the high cost of the stops is also a serious drawback of this alternative.
- A possibility of implementing mill wear is to axially drill the bolts and insert into the bore an element which, depending on the wear of the bolt, is indicating its wear. The indication of mill wear through these perforated bolts has been implemented by light indicators and radio frequency transmission systems have also been implemented to a data processing and display system, however the high cost of performing drilling on long bolts makes this solution impractical and is not widespread in the industry.
- with Respect to the tension of the bolts, washers or hooks have been applied with strain gauge or devices for measuring tightening stress of the bolt. This solution is of high cost and is used in a very marginal manner in the industry.

### DETAILED DESCRIPTION OF THE INVENTION

The invention consists of installing at the threaded end of the bolts supporting the inner casing of industrial mills, an ecographic instrument capable of measuring directly and transmitting on line, the length of the bolts and thereby estimating the wear state of the inner lining and the tightening tension of the bolts (see FIG. 1 ).

### INDUSTRIAL APPLICATION

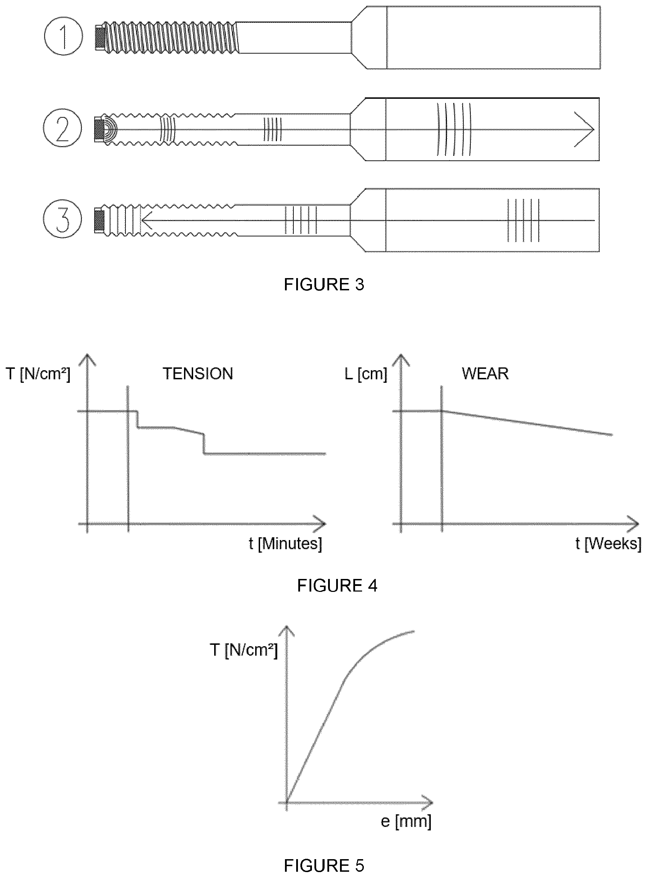

The tension to which the pin is subjected is a variable that evolves from the tension that is imposed by the initial tightening (see FIG. 4) and which tends to progressively lower the different events that occur in their useful life, in particular of traumatic or high energy events. To measure the tension, the total length of the bolt is measured and the fact that in the elastic limit is applied, the tension of the bolt is proportional to the elongation, with a proportional constant of the Young 's modulus obtained from tests to similar bolts. T = *E* e, (E = Young 's modulus) (see FIG. 5).

On the other hand, the wear of the bolt occurs in the interior area of the mill and is a variable that is slowly and constantly evolving over time (see FIG. 4 ).

Aspects regarding the industrial application of the invention are mentioned below.

### MEASUREMENT TECHNIQUE

The idea is to incorporate an ecographic device at the threaded end of the bolt. The echographic device emits acoustic wave trains into the inside of the bolt and as a consequence of undulating phenomena such as reflection, refraction, interference and others, it is possible to obtain an echographic or echo spectrum that is interpretable and from which the tightening stress of the bolt, the length of the bolt and the wear of the inner lining of the mill can be estimated (see FIG. 1 and FIG. 3).

### POWER SUPPLY

The echographic device to be incorporated needs to emit acoustic signals to the inside of the instrumented bolt, so that there is an energy expenditure associated with the emission of acoustic signals that must be supplied by some source. In turn, the period between changes of coatings and mill bolts depends on its level of exploitation, however it is known that the period in question is on the order of months, typically the change of coating and bolts of SAG mills is performed twice the year and the change of coating and bolts of ball mills is performed once A year. Considering a discrete information requirement, ie, the emission of pulses is of a limited number, it is possible to use commercial batteries or batteries.

### INFORMATION TRANSMISSION

The information generated by the ecographic devices installed on the bolts that are installed and rotating with the mill must be transmitted to a communications manager device with information storage and transmission capability that must be installed in a fixed position and a prudent distance so that communication with the bolts installed on the mill bolts is feasible. This device should include a high level communication system, either through a local network of the plant or other wireless communication system to communicate with (iii) a data analysis and analysis system that can be in a remote position.

### ECOGRAPHIC DEVICE CONSTRUCTION

The device for measuring the wear and the tension of the mill bolts is comprised of the following elements:
1. The emitter of acoustic waves or speaker, which is a device capable of emitting acoustic waves into the inside of the bolt.
2. An acoustic wave Receiver or microphone, which is a device capable of detecting acoustic signals from the pin.
3. The electronic Circuit equipped with an amplification system that supplies the power necessary to emit acoustic signals to the inside of the bolt using the speaker and in turn is capable of translating acoustic signals into electronic signals taking the microphone from the inside of the bolt.
4. A galvanic Cell, which is a power source capable of supplying energy to the echograph during the time of operation of the bolt in the mill.
5. A radio frequency communication system comprised of a transponder (capable of coordinating transmission and reception of communications) and an antenna that is capable of transmitting the wear and/or tension information of the bolt at each time it is required.

### DESCRIPTION OF FIGURES

FIG. 1: Components installed in a hole performed on the threaded end of the instrumented bolt: (E) emitter, (R) receiver, (uC) micro electronic controller, (- +) galvanic cell and (λ) transmission system.
FIG. 2 is a typical mill bolt View. The traction area is observed (1), (2) the area of elongation and (3) the pin of the bolt.
FIG. 3: (1) the outer aspect of the bolt. Inside the bolt (2) the emitter generates pulse train, (3) the signal is refracted and reflected and at the interfaces and the refracted wave train generates an interpretable spectrum and the receiver receives the spectrum.
FIG. 4: the tension and wear of a bolt are variables that are measured with the same device, however, the variation of both is perfectly distinguishable from one another as the wear occurs slowly while the useful life of the bolt and the pin tension, in turn, varies from its initial value by reducing the traumatic or high energy events that occur during the useful life of the bolt.
FIG. 5: The pin tension is approximately proportional to a measurable deformation, within the elastic limit.

## Claims

1. A system for the in-line measurement of mill liner wear and mill bolt tension, wherein includes:
(a) at the threaded end of a determined number of bolts, an acoustic wave emitter (E), an acoustic wave receiver (R), an electronic circuit, a power source and a communication device;
(b) in the vicinity of the mill, a data storage and accumulation management device; and
(c) in a remote position, a data processing and deployment system

2. The system according to claim 1, wherein comprising at the threaded end of a given number of bolts, a single device which behaves as an emitter and as a receiver of acoustic waves at different times of time.

3. The system according to claim 1, wherein comprising at the threaded end of a given number of bolts, a galvanic battery as a power source

4. The system according to claim 1, wherein comprising at the threaded end of a determined number of bolts, such as a communication device, a radio frequency communication device.

## Patentansprüche

1. System zur Inline-Messung des Auskleidungsverschleißes und der Bolzenspannung eines Mahlwerks, umfassend:
(a) am Gewindeende einer vorgegebenen Anzahl von Bolzen, einen Schallwellensender (E), einen Schallwellenempfänger (R), eine elektronische Schaltung, eine Stromquelle und eine Kommunikationseinrichtung,
(b) in der Nähe des Mahlwerks, eine Einrichtung zur Datenspeicherung und zum Akkumulationsmanagement, und
(c) an einem entfernten Ort, ein Datenverarbeitungs- und Einsatzsystem.

2. System nach Anspruch 1, **dadurch gekennzeichnet, dass** am Gewindeende einer vorgegebenen Anzahl von Bolzen eine einzige Einrichtung angeordnet ist, die sich zu unterschiedlichen Zeiten als Sender und als Empfänger für Schallwellen verhält.

3. System nach Anspruch 1, **dadurch gekennzeichnet, dass** am Gewindeende einer vorgegebenen Anzahl von Bolzen eine galvanische Batterie als Stromquelle angeordnet ist.

4. System nach Anspruch 1, **dadurch gekennzeichnet, dass** am Gewindeende einer vorgegebenen Anzahl von Bolzen eine Hochfrequenz-Kommunikationseinrichtung als eine Kommunikationseinrichtung angeordnet ist.

## Revendications

1. Système de mesure en ligne de l'usure de revêtement de broyeur et de la tension des boulons de broyeur, comprenant :
(a) à l'extrémité filetée d'un nombre prédéterminé de boulons, un émetteur (E) d'ondes acoustiques, un récepteur (R) d'ondes acoustiques, un circuit électronique, une source d'alimentation et un dispositif de communication ;
(b) à proximité du broyeur, un dispositif de gestion du stockage et de l'accumulation des données ; et
(c) à distance, un système de traitement et de déploiement des données.

2. Système selon la revendication 1, comprenant à l'extrémité filetée d'un nombre prédéterminé de boulons, un dispositif unique qui se comporte comme un émetteur et comme un récepteur d'ondes acoustiques à différents moments du temps.

3. Système selon la revendication 1, comprenant à l'extrémité filetée d'un nombre de boulons, une batterie galvanique comme source d'alimentation.

4. Système selon la revendication 1, comprenant à l'extrémité filetée d'un nombre prédéterminé de boulons, un dispositif tel qu'un dispositif de communication, un dispositif de communication par radiofréquence.
